# EUROPEAN PATENT SPECIFICATION

(11) **EP 1 334 227 B1**
(45) Date of publication and mention of the grant of the patent: **21.10.2009**
(21) Application number: 01996649.8
(22) Date of filing: 15.11.2001
(51) Int. Cl.: D06F 23/02

(54) **DRUM TYPE WASHING MACHINE WITH ROTATABLE BAFFLE**
TROMMELWASCHMASCHINE MIT DREHBARER STAUWAND
MACHINE A LAVER A TAMBOUR AVEC CHICANE TOURNANTE

(30) Priority: 17.11.2000 KR 2000068454
(43) Date of publication of application: 13.08.2003
(73) Proprietor: LG Electronics, Inc., Seoul 150-010 (KR)
(72) Inventor: CHOI, Seung-Bong, Changwong-shi, Kyeongsangnam-do 641-060 (KR)
(74) Representative: Schorr, Frank Jürgen
(86) International application number: PCT/KR2001/001949
(87) International publication number: WO 2002/040762

(56) References cited:
- WO-A-99/58753
- JP-A- 2 277 493
- JP-A- 4 092 697
- KR-U- 2000 009 517
- PATENT ABSTRACTS OF JAPAN vol. 015, no. 126 (C-0817), 27 March 1991 (1991-03-27) -& JP 03 009787 A (SHARP CORP), 17 January 1991 (1991-01-17)
- PATENT ABSTRACTS OF JAPAN vol. 015, no. 193 (C-0832), 17 May 1991 (1991-05-17) -& JP 03 051080 A (SHARP CORP), 5 March 1991 (1991-03-05)
- PATENT ABSTRACTS OF JAPAN vol. 015, no. 302 (C-0855), 2 August 1991 (1991-08-02) -& JP 03 111089 A (SHARP CORP), 10 May 1991 (1991-05-10)
- PATENT ABSTRACTS OF JAPAN vol. 1996, no. 12, 26 December 1996 (1996-12-26) -& JP 08 206389 A (KAWASAKI SEIKOUKI:KK), 13 August 1996 (1996-08-13)
- PATENT ABSTRACTS OF JAPAN vol. 2000, no. 01, 31 January 2000 (2000-01-31) -& JP 11 276778 A (SHARP CORP), 12 October 1999 (1999-10-12)
- PATENT ABSTRACTS OF JAPAN vol. 1998, no. 02, 30 January 1998 (1998-01-30) -& JP 09 266997 A (KUROISHI TEKKO KK; TSUBAKIMOTO EMASON:KK), 14 October 1997 (1997-10-14)

## Description

### Technical Field

The present invention relates to a drum type washing machine, and more particularly, to a drum type washing machine with a baffle inside of a drum which is rotatable in a direction opposite to a rotational direction of the drum.

### Background Art

In general, the drum type washing machine, carrying out washing by using a friction force between a drum rotated as a driving power of a motor part is received, and laundry in a state detergent, washing water, and the laundry are introduced into the drum, gives little damage to the laundry, has little entangling of the laundry, and can provide a washing effect of pounding and rubbing the laundry. Document JP 03009787 A discloses a washing/drying machine having a drum and an agitating plate which can be rotated independently from each other. The agitating plate is driven by a first motor. The drum is driven by a second motor. Document JP 03051080 A discloses a washing/drying machine comprising a steering disk and a drum which are rotatable independently from each other. The steering disk is driven by a first motor and the drum is driven by a second motor. Thus, both documents JP 03009787 A and JP 03051080 A disclose a drum type washing machine comprising the features of the preamble of independent claim 1.

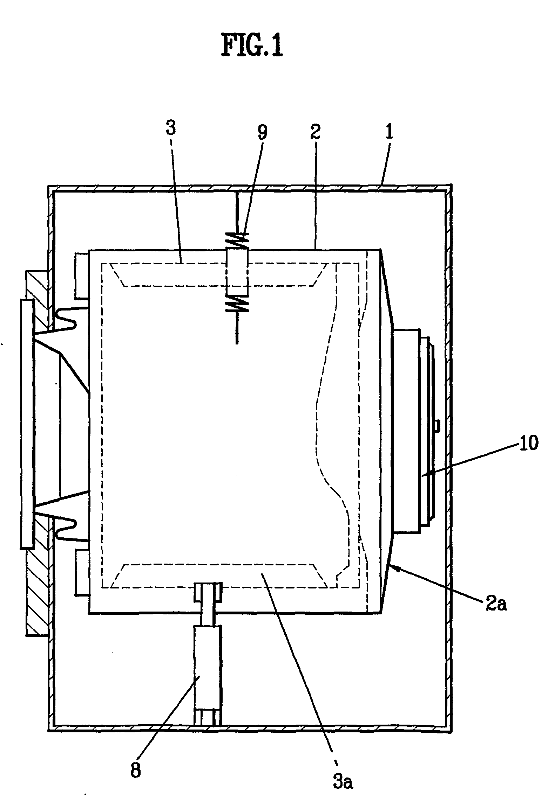

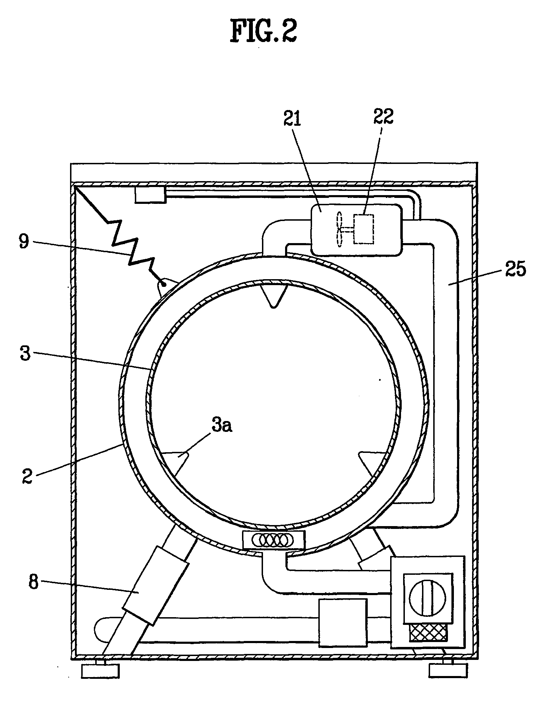

FIG. 1 illustrates a side section of a related art drum type washing machine, and FIG. 2 illustrates a front section of FIG. 1.

Referring to FIG. 1, the related art drum type washing machine is provided with a cylindrical tub 2 in a cabinet 1, and a cylindrical drum 3 rotatably fitted in the tub 2. There is a driving shaft (not shown) having a fore end fixed to a spider (not shown) fixed to rear part of the drum 3, and a rear end passed through a central part of the tub 2, extended to an outside of the rear wall 2a of the tub 2, and coupled with a rotor (not shown) of a motor part 10. According to this, when a voltage is applied to a stator (not shown) in the motor part 10, the rotor in the motor part 10 rotates, and the driving shaft is rotated according to rotation of the rotor.

In the meantime, there are hanging springs 9 between an inside circumference of an upper part of the cabinet 1, and an outside circumference of an upper part of the tub 2 for supporting the tub 2, and there is a damper 8 between an inside circumference of a lower part of the cabinet 1 and an outside circumference of a lower part of the tub 2, for attenuating vibration of the tub 2 occurred in spinning.

In a case of a drum type washing machine having a drying function, the drum type washing machine is provided with a drying means additionally which has, as shown in FIG. 2, a duct with an end connected to one side of a lower part of the tub 2, and the other end extended upward and connected to the upper part of the tub 2. There is a drying heater 21 on the duct 25 extended to the upper side of the tub 2 for generating a drying heat, and there is a fan 22 for supplying the heat from the drying heater 21 into the drum 3.

The operation of the related art drum type washing machine will be explained.

Upon application of power to the motor part 10 after laundry, detergent, and washing water are introduced into the drum 3, the rotor rotates. According to the rotation of the rotor, the driving shaft rotates, and according to the rotation of the driving shaft, the drum 3 rotates. According to this, the laundry repeats cycling of rolling, and being lifted up to a certain height along an inside surface of the drum 3 by lifters 3a on the inside surface of the drum 3, and falling down, to make the washing done by a friction force between the laundry, the drum 3, and the lifters 3a. When the washing is finished, the drum 3 spins for extracting water in the laundry by using a centrifugal force from the spin. In the case of the drum type washing machine with a drying function, the drying heater 21 comes into operation after the spinning is finished, to generate heat, and the fan 22 is rotated, to supply heated air into the drum 3, for drying the laundry in the drum 3.

However, the related art washing machine has the following problems.

First, the related art drum type washing machine has an inadequate friction force applicable to the laundry, with a poor washing efficiency, and a long washing time period, because the related art drum type washing machine washes the laundry by applying friction to the laundry inside of the drum 3 by means of lifters 3a on an inside surface of the drum to move together with the drum 3.

Second, even if parts of the laundry are inserted in drain holes in the drum 3 by the centrifugal force when the spinning is finished, the related art drum type washing machine dries the laundry without taking out the laundry from the drain holes, but as the laundry is stuck to the wall surface of the drum 3. Consequently, since the heated air can not be blown to the laundry uniformly because the drying is conducted in a state the laundry is stuck to the wall surface of the drum 3, with wrinkles, or overlapped states, the drying performance is poor.

Third, the drying with wrinkles, or overlapped states of the laundry, there are the wrinkles after the drying is completed.

### Disclosure of the Invention

Accordingly, the present invention is directed to a drum type washing machine with a rotatable baffle that substantially obviates one or more of the problems due to limitations and disadvantages of the related art.

An object of the present invention is to provide a drum type washing machine with a rotatable baffle, in which a friction applied to laundry is increased for enhancing a washing efficiency.

Another object of the present invention is to provide a drum type washing machine with a rotatable baffle, in which drying is conducted after spun laundry is taken off from an inside surface of the drum, for prevention of formation of wrinkles on the laundry, and deterioration of drying performance.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the drum type washing machine with a rotatable baffle includes the features of claim 1.

The baffle in the drum fitted to be rotatable in a direction opposite to a direction of rotation of the drum for taking the laundry off an inside surface of the drum when a drying function is carried out in which spun laundry is dried by drying means at one side of inside of the cabinet.

Preferably, the drum type washing machine further includes a rotation force transmission device for rotating the baffle upon receiving the rotation force from the motor part including a gear box fixed inside of the gear box housing having opened fore end and rear end for allowing the inner, and outer drum shafts to pass therethrough, or be inserted therein, a sun gear fitted coaxially with a driving shaft for interlocked rotation with the driving shaft, a plurality of planetary gears for being rotated upon receiving rotation force from the sun gear, a shaft extension extended from the rear end of the drum shaft having an inner circumference with a gear part for engagement with the planetary gears, a carrier having a rotation shaft in front of a base, which is a rotation center of the planetary gears, and an extension in rear of the base positioned between the inner drum shaft and a rear opening in the gear box, first one way rotation means between an outside circumference of the driving shaft and an inside circumference of the drum shaft for permitting one way interlocked rotation of the inner, and outer drum shafts, and second one way rotation means between an inside circumference of the rear end opening in the gear box and an outside circumference of the extension of the carrier for permitting one way rotation of the carrier.

The baffle includes a circular rear face having a diameter smaller than a diameter of the rear wall of the drum, a plurality of lifters each elongated in a front direction parallel to an inside surface of the drum from the rear face, and a reinforcing rib part formed along a circumferential direction of the inside surface of the drum to connect the lifters.

Preferably, the reinforcing rib part includes at least one rib along a length of the lifter, and the reinforcing rib includes a surface aligned with a bottom surface of the lifter.

Preferably, the baffle is formed of plastic, by injection molding as one unit.

Preferably, the baffle is designed to rotate in a direction opposite to the drum in washing, and in the same direction with the drum in spinning, and the baffle is designed to rotate in the same direction with the drum in spinning, and in a direction opposite to the drum in washing, or drying.

The reinforcing rib preferably includes a plurality of projections in a radial direction.

As has been explained, the drum type washing machine of the present invention can enhance a washing efficiency because the baffle increases a friction to the laundry as the baffle and the drum rotate in opposite directions, improves a laundry drying performance because spun laundry is taken off from an inside surface of the drum before drying the laundry, and prevents formation of wrinkles on dried laundry.

It is to be understood that both the foregoing general description and the following detailed description are exemplary and explanatory and are intended to provide further explanation of the invention as claimed.

### Brief Description of Drawings

The accompanying drawings, which are included to provide a further understanding of the invention and are incorporated in and constitute a part of this specification, illustrate embodiments of the invention and together with the description serve to explain the principles of the invention:
In the drawings:
   FIG. 1 illustrates a side section of a related art drum type washing machine;
   FIG. 2 illustrates a front section of FIG. 1;
   FIG. 3 illustrates a side section of a drum type washing machine in accordance with a preferred embodiment of the present invention;
   FIG. 4 illustrates a perspective view of a baffle in a drum type washing machine of the present invention; and,
   FIG. 5 illustrates an enlarged view of "A" part in FIG. 3.

### Best Mode for Carrying Out the Invention

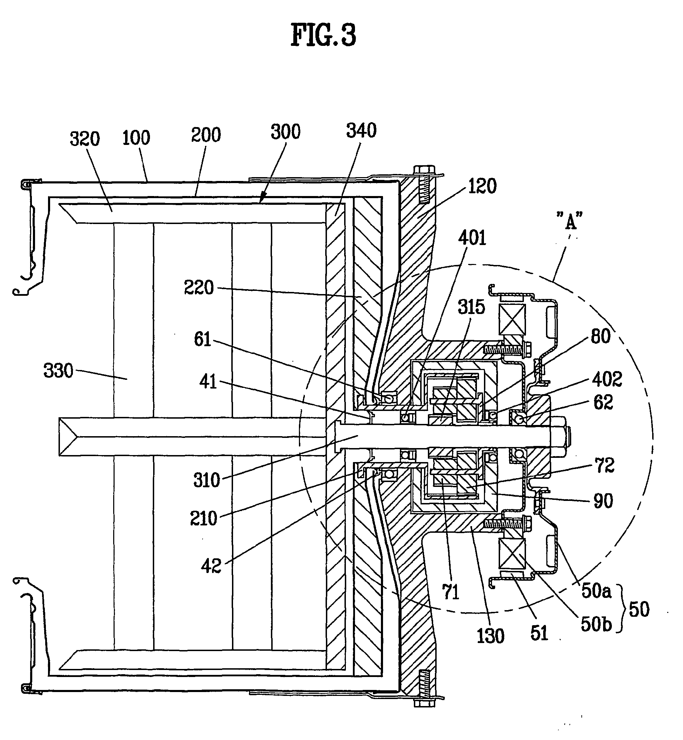

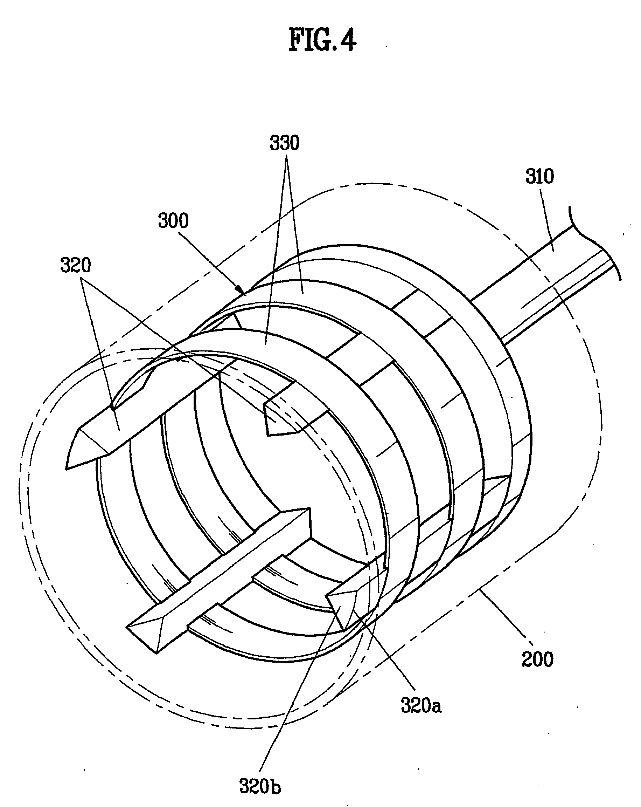

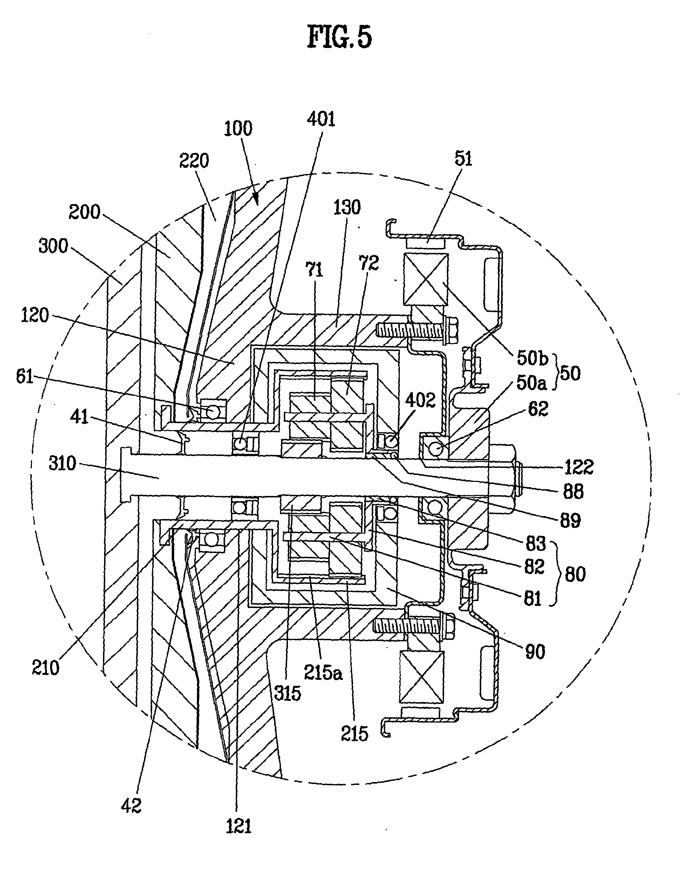

Reference will now be made in detail to the preferred embodiments of the present invention, examples of which are illustrated in the accompanying drawings. For convenience of description, a left part on the drawing is taken as a front part of the drum type washing machine, and a right part on the drawing is taken as a rear part of the drum type washing machine. FIG. 3 illustrates a side section of a drum type washing machine in accordance with a preferred embodiment of the present invention, FIG. 4 illustrates a perspective view of a baffle in a drum type washing machine of the present invention, and FIG. 5 illustrates an enlarged view of "A" part in FIG. 3.

Referring to FIG. 3, the drum type washing machine in accordance with a preferred embodiment of the present invention includes a tub 100 in a cabinet, and a cylindrical drum 200 movably fitted in the tub 100 having an opening in a front part. There is a baffle 300 rotatably fitted inside of the drum 200, coaxial with the drum 200. The baffle 300 with a diameter smaller than the drum 200 has a rear face part 340 with a thickness, and a plurality of lifters 320 in front of the rear face part 340 extended parallel to an inside surface of the drum 200. The lifter 320 has a length shorter than an axial length of the drum 200.

Referring to FIG. 4, the lifter 320 has a triangular section, however, the section is not limited to triangle, but may be polygonal, or circular. The lifter 320 has a bottom 320a having a width greater than an upper part 320b projected in an inward radial direction. There are reinforcing ribs 330 between the lifters 320 along a circumferential direction of an inside surface of the drum 200 connecting the bottom 320a of the lifters 320 for enhancing a supporting force between the lifters 320. It is preferable that there are a plurality of inward projections (not shown) from the reinforcing ribs 330 for enhancing friction with the laundry. There are at least one reinforcing ribs 330 along a length direction of the lifter 320, with a bottom of the reinforcing rib 330 aligned with the bottom 320 of the lifter 320. The baffle 300 may be formed of a metal, or a plastic. When the baffle 300 is formed of plastic, the reinforcing rib 330, the rear face part 340, and the lifters 320 may be injection molded as one unit. It is preferable that the baffle 300 is formed of a material having a strong heat resistance, and a strong wear resistance.

Referring to FIG. 5, there is a driving shaft 310 having a fore end fixed to a rear end of the baffle 300, and a rear end, passed through a central part of the rear wall 120 of the tub 100, and coupled to a rotor 50a of the motor part 50 in rear of the rear wall 120. There is a spider 220 fixed at a rear end of the drum 200, and a drum shaft 210 fixed at a central part of the spider 220. There is a gear box housing 130 extended from rear of a rear wall 120 of the tub 100 formed as a unit with the tub 100 having a cavity in which the drum shaft 210, and the driving shaft 310 are rotatably inserted. There is a cylindrical gear box 90 inside of the gear box housing 130, having openings in front, and rear part.

The gear box housing 130 has a front through hole 121 in a central part of a front part of the gear box housing 130 (i.e., the rear wall 120 of the tub 100), and a rear through hole 122 in a central part of rear of the gear box housing 130 with a diameter enough to pass the driving shaft 310. There is a front bearing 61 in a front part of the front through hole 121, and a rear bearing 62 in a rear part of the rear through hole 122. In this instance, an inner lace of the front bearing 61 rotatably supports an outer circumference of the drum shaft 210, and an inner lace of the rear bearing 62 rotatably supports an outer circumference of the driving shaft 310.

As explained, the driving shaft 310 passes through the rear wall 120 of the tub 100, and is rotatably supported and takes rotation force of the motor part 50 in rear of the rear wall 120, which will be explained, in detail.

The driving shaft 310 passes through the rear through hole 122 of the gear box housing 130, and coupled with a rotor 50a in the motor part 50 by known fastening means, such as bolt, and the like, at a rear end thereof. There is a stator 50b fitted to a rear end of the gear box housing 130, with magnets 51 of the rotor 50a designed to come opposite to the stator 50b in an outer side of the stator 50b in a radial direction, to form a motor part 50 for generating the rotating force by means of the rotor 50a and the stator 50b. Accordingly, upon application of power to the motor 50, the rotor 50a rotates in regular/reverse direction, to rotate the baffle 300 in regular/reverse direction too as the driving shaft 310 coupled to the rotor 50a rotates.

According to the drum type washing machine of the present invention, the baffle 300 and the drum 200 are designed to rotate in opposite directions (for an example, the baffle rotates in a clockwise direction, while the drum rotates in a counter clockwise direction) in washing, or drying, and to rotate in the same direction (for an example, both the baffle, and the drum rotate in the counter clockwise direction) in spinning. The opposite direction rotation of the baffle 300, and the drum 200 is implemented by the rotation force transmission device of the present invention, and the same direction rotation of the baffle 300, and the drum 200 is implemented by the first, and second one way rotation means 401, and 402, permitting a reverse direction rotation of the drum 200 with respect to a rotation direction of the baffle 300 in washing, or drying, and the same direction rotation of the baffle 300 and the drum 200 in spinning.

The rotation force transmission device in the drum type washing machine of the present invention will be explained.

The drum shaft 210 has a cylindrical shaft extension 215 extended from a rear end to inside of the gear box 90 in which there is a gear part 215a. The shaft extension 215 has a diameter greater than a diameter of the drum shaft 210, and smaller than a diameter of the gear box 90. There is a sun gear 315 coaxial to the driving shaft 310 for rotation together with the driving shaft 310. There are a plurality of planetary gears 71, and 72 for taking, and being rotated by a rotation force of the sun gear 315, each of which planetary gears 71, and 72 has two gears fitted coaxially as one unit, with different radiuses, and number of teeth. The planetary gears 71, and 72 are supported on respective rotation shafts 81 on a base 82 of a carrier 80, and engaged with the gear part 215a on the shaft extension 215, for transmission of a rotation force of the sun gear 315 to the drum shaft 210. There is an extension 83 from rear of the base 82 extended to a rear direction between the driving shaft 310 and the rear end opening of the gear box 90, with a gap between the extension 83 and the outer circumference of the driving shaft 310. There is an oiless bearing 89 and sealing means 88 between an inner circumference of the extension 83 and the outer circumference of the driving shaft 310 in succession for making a space between the extension 83 and the driving shaft 310 air tight. On the other hand, there is sealing means 41 between the inner circumference of the drum shaft 210, and the outer circumference of the driving shaft 310 for preventing leakage of water to the gear box 90. Also, There is sealing means 42 between the outer circumference of the drum shaft 210 and the spider 220 in rear of the drum 200 for preventing leakage of water to the front bearing 61.

There are two planetary gears 71, and 72 on the shaft 81 of the carrier 80 having different radiuses and numbers of teeth, for an appropriate adjustment of a rotation speed of the baffle 300 and the drum 200 by an appropriate change of the radiuses and the numbers of gear teeth. That is, an appropriate adjustment of a rotation ratio of the baffle 300 and the drum 200 facilitates an enhancement of the washing efficiency.

It can be known that, as has been explained, because the rotation force is transmitted to the drum shaft 210 by the rotation force transmission device in a case the driving shaft 310 rotates, the driving shaft 310 and the drum shaft 210 rotate in opposite directions, that implements the opposite direction rotation of the baffle 300 and the drum 200.

First, and second one way rotation means will be explained.

There is the first one way rotation means 401 between the outer circumference of the driving shaft 310 and the inner circumference of the drum shaft 210 for one way interlocked rotation of the inner, and drum shafts 310, and 210. There is the second one way rotation means 402 between the inner circumference of the rear end opening of the gear box 90, and the outer circumference of the extension 83 of the carrier 80 for one way rotation of the carrier 80. That is, the first, and second one way rotation means 401, and 402 may be, for an example, one way bearings, for, as an example, rotating the drum 200 in the clockwise direction by rotating the driving shaft 310 in the counter clockwise direction, that rotates the baffle 300 in the counter clockwise direction, which will be explained, in detail.

The inner lace of the first one way rotation means 401 held on an outer circumference of the driving shaft 310 is fitted such that clockwise rotation of the driving shaft 310 is permitted, while counter clockwise rotation of the driving shaft 310 is not permitted, to make interlocked rotation of the drum shaft 210 and the driving shaft 310 by restriction of the first one way rotating means 401 when the rotor 50a is rotated in the counter clockwise direction. As has been explained, when both the driving shaft 210, and the drum shaft 310 are rotated in the counter clockwise direction, both the sun gear 315 on the driving shaft 310, and the planetary gears 71, and 72 engaged with the gear part 215a of the shaft extension 215 are remained stationary. Accordingly, the carrier 80 is also rotated in the counter clockwise direction interlocked with the inner; and drum shafts 310, and 210.

In the meantime, the second one way rotation means 402 permits an interlocked rotation of the carrier 80 in a direction opposite to the interlocked rotation direction of the driving shaft 310 and the drum shaft 210 that the first one way rotation means 401 permits. That is, under a state all the driving shaft 310, the drum shaft 210, and the carrier 80 make interlocked counter clockwise direction rotation, the second one way rotation means 402 is fitted not to restrict the rotation in the rotation direction (counter clockwise direction) of the carrier 80. The second one way rotation means 402 is fitted to restrict clockwise rotation of the carrier 80 under the following reason. When the rotor 50a rotates in the clockwise direction, the driving shaft 310 and the drum shaft 210 rotate in opposite directions, to rotate the carrier 80 in a direction the same with the driving shaft 310. In this instance, if the rotation of the carrier 80 is restricted, the rotation force of the drum shaft 210 can be maintained, more positively. From the foregoing description, it can be known that, when the rotor 50a rotates in the counter clockwise direction, both the driving shaft 310 and the drum shaft 210 rotate in the same direction, to make the baffle 300 and the drum 200 to rotate in the same direction.

The drum type washing machine of the present invention may be employed in a washing machine with, or without a drying function, which will be explained in more detail. That is, setting of rotation direction of the rotor 50a may be made differ by a control part in washing, spinning, and drying, depending on employment of the drying function.

When the drum type washing machine of the present invention is employed in a washing machine without the drying function, the rotation direction of the rotor 50a is set to be the clockwise direction by the control part in washing. In this instance, the baffle 300 and the drum 200 rotate in opposite directions in washing (for an example, the baffle rotates in a clockwise direction, while the drum rotates in a counter clockwise direction). In spinning, the rotation direction of the rotor 50a is set to be the counter clockwise direction, and to rotate at a regular rotation speed for spinning. In spinning, the baffle 300 and the drum 200 rotate in the same direction (for an example, both the baffle and the drum rotate in the counter clockwise direction). By setting the rotation direction of the rotor 50a thus, washing is made while the drum 200 and the baffle 300 rotate in opposite directions, and spinning is made while the drum 200 and the baffle 300 rotate in the same direction.

On the other hand, when the drum type washing machine of the present invention is employed in a washing machine with the drying function, the rotation direction of the rotor 50a is set to be the counter clockwise direction by the control part in spinning so that the spinning is made as the drum 200 and the baffle 300 rotate in the same direction. In this instance, the rotation speed of the rotor 50a in the spinning is set to be a regular spinning speed. In washing, or drying, the rotation direction is set to be the clockwise direction by the control part, to rotate the baffle 300 and the drum 200 in opposite directions. Eventually, in spinning, the rotation directions of the baffle 300 and the drum 200 are the same while the rotation directions of the drum 200 and the baffle 300 are opposite in washing, or drying.

It will be apparent to those skilled in the art that various modifications and variations can be made in the drum type washing machine with a rotatable baffle of the present invention without departing from the spirit or scope of the invention. Thus, it is intended that the present invention cover the modifications and variations of this invention provided they come within the scope of the appended claims and their equivalents.

### Industrial Applicability

As has been explained, the drum type washing machine, provided with a baffle inside of a drum rotatable opposite to the drum, can enhance a washing efficiency because the baffle increases a friction to the laundry as the baffle and the drum rotate in opposite directions in a case of drum type washing machine without a drying function. In a case of drum type washing machine with a drying function, a laundry drying performance is improved because spun laundry is taken off from an inside surface of the drum before drying the laundry. Moreover, formation of wrinkles on dried laundry is prevented.

## Claims

1. A drum-type washing machine with a rotatable baffle (300) comprising:
a tub (100) fitted in a cabinet;
a drum (200) in a tub (100) to be rotatable as rotation force is received from a motor part (50); and
the baffle (300) fitted in the drum (200) to be rotatable in a direction opposite or the same to a direction of rotation of the drum (200),
**characterized in that**
the baffle (300) is rotatable in the same or opposite direction of rotation of the drum (200) depending on a direction of rotation force provided by the same motor part (50).

2. The drum type washing machine as claimed in claim 1, wherein the baffle (300) in the drum (200) fitted to be rotatable in a direction opposite to a direction of rotation of the drum (200) for taking the laundry off an inside surface of the drum (200) when a drying function is carried out in which spun laundry is dried by drying means at one side of inside of the cabinet.

3. The drum type washing machine as claimed in claim 1 or 2, further comprising a rotation force transmission device for rotating the baffle (300) upon receiving the rotation force from the motor part (50).

4. The drum type washing machine as claimed in claim 3, wherein the rotation force transmission device includes;
a gear box (90) fixed inside of the gear box housing (130) having opened fore end and rear end for allowing the inner, and outer drum shafts (310,210) to pass therethrough, or be inserted therein,
a sun gear (315) fitted coaxially with a driving shaft (310) for interlocked rotation with the driving shaft (310),
a plurality of planetary gears (71,72) for being rotated upon receiving rotation force from the sun gear (315),
a shaft extension (215) extended from the rear end of the drum shaft (210) having an inner circumference with a gear part (215a) for engagement with the planetary gears (71,72),
a carrier (80) having a rotation shaft (81) in front of a base (82), which is a rotation center of the planetary gears (71,72), and an extension (83) in rear of the base (82) positioned between the inner drum shaft (310) and a rear opening in the gear box (90),
first one way rotation means (401) between an outside circumference of the driving shaft (310) and an inside circumference of the drum shaft (210) for permitting one way interlocked rotation of the inner, and outer drum shafts (310,210), and
second one way rotation means (402) between an inside circumference of the rear end opening in the gear box (90) and an outside circumference of the extension of the carrier (80) for permitting one way rotation of the carrier (80).

5. The drum type washing machine as claimed in one of claims 1 to 4, wherein the baffle (300) includes;
a circular rear face (340) having a diameter smaller than a diameter of a rear wall (120) of the drum (200),
a plurality of lifters (320) each elongated in a front direction parallel to an inside surface of the drum (200) from the rear face (340), and
a reinforcing rib part (330) formed along a circumferential direction of the inside surface of the drum (200) to connect the lifters (320).

6. The drum type washing machine as claimed in claim 5, wherein the reinforcing rib part includes at least one rib (330) along a length of the lifter (320).

7. The drum type washing machine as claimed in one of claims 5 and 6, wherein the reinforcing rib part (330) includes a surface aligned with a bottom surface of the lifter (320).

8. The drum type washing machine as claimed in one of claims 5 to 7, wherein the reinforcing rib part (330) includes a plurality of projections in a radial direction.

9. The drum type washing machine as claimed in one of claims 1 to 8, wherein the baffle is formed of plastic.

10. The drum type washing machine as claimed in claim 9, wherein the baffle is injection molded as one unit.

11. The drum type washing machine as claimed in one of claims 1 to 10, wherein the baffle (300) is designed to rotate in a direction opposite to the drum (200) in washing and/or drying, and in the same direction with the drum (200) in spinning.

## Patentansprüche

1. Trommelwaschmaschine mit einem drehbaren Leitblech (300), umfassend:
eine Wanne (100), die in ein Gehäuse eingepasst ist;
eine Trommel (200) in einer Wanne (100), die gedreht werden kann, wenn eine Drehkraft von einem Motorteil (50) aufgenommen wird; und
das Leitblech (300), das in die Trommel (200) eingepasst ist, um in eine Richtung gedreht zu werden, die einer Drehrichtung der Trommel (200) entgegengesetzt ist oder die gleiche ist wie diese,
**dadurch gekennzeichnet, dass**
das Leitblech (300) in die gleiche oder die entgegengesetzte Drehrichtung der Trommel (200) in Abhängigkeit einer Drehkraftrichtung, die von dem gleichen Motorteil (50) bereitgestellt wird, drehbar ist.

2. Trommelwaschmaschine gemäß Anspruch 1, wobei das Leitblech (300) in die Trommel (200) derart eingepasst ist, dass es in eine Richtung, die einer Drehrichtung der Trommel (200) entgegengesetzt ist, gedreht werden kann, um die Wäsche von einer inneren Oberfläche der Trommel (200) zu nehmen, wenn eine Trocknungsfunktion ausgeführt wird, bei der geschleuderte Wäsche durch Trocknungsmittel an einer Seite des Inneren des Gehäuses getrocknet wird.

3. Trommelwaschmaschine gemäß Anspruch 1 oder 2, ferner umfassend eine Drehkraft-Übertragungsvorrichtung zum Drehen des Leitblechs (300) nach Aufnahme der Drehkraft von dem Motorteil (50).

4. Trommelwaschmaschine gemäß Anspruch 3, wobei die Drehkraft-Übertragungsvorrichtung Folgendes aufweist:
ein Getriebe (90), das im Inneren des Getriebegehäuses (130) befestigt ist und ein geöffnetes vorderes Ende und hinteres Ende aufweist, damit die innere und die äußere Trommelwelle (310, 210) **dadurch** geführt oder darin eingesetzt werden können,
ein Sonnenrad (315), das koaxial mit einer Antriebswelle (310) für eine gegeneinander verriegelte Drehung mit der Antriebswelle (310) eingepasst ist,
mehrere Planetenräder (71, 72), die durch die Aufnahme der Drehkraft von dem Sonnenrad (315) gedreht werden,
eine Wellenverlängerung (215), die sich von dem hinteren Ende der Trommelwelle (210) erstreckt und einen inneren Umfang mit einem Getriebeteil (215a) zum Eingriff in die Planetenräder (71, 72) aufweist,
einen Träger (80) mit einer Drehwelle (81) vor einer Basis (82), die ein Drehzentrum der Planetenräder (71, 72) ist, und einer Verlängerung (83) hinter der Basis (82), die zwischen der inneren Trommelwelle (310) und einer hinteren Öffnung in dem Getriebe (90) positioniert ist,
erste Einrichtungs-Drehmittel (401) zwischen einem äußeren Umfang der Antriebswelle (310) und einem inneren Umfang der Trommelwelle (210), um eine gegeneinander verriegelte Drehung der inneren und der äußeren Trommelwelle (310, 210) in eine Richtung zu ermöglichen, und
zweite Einrichtungs-Drehmittel (402) zwischen einem inneren Umfang der hinteren Endöffnung in dem Getriebe (90) und einem äußeren Umfang der Verlängerung des Trägers (80), um eine Drehung des Trägers (80) in eine Richtung zu ermöglichen.

5. Trommelwaschmaschine gemäß einem der Ansprüche 1 bis 4, wobei das Leitblech (300) Folgendes aufweist:
eine kreisförmige hintere Fläche (340) mit einem Durchmesser, der kleiner als ein Durchmesser einer hinteren Wand (120) der Trommel (200) ist,
mehrere Heber (320), von denen jeder in einer Vorwärtsrichtung parallel zu einer inneren Oberfläche der Trommel (200) von der hinteren Fläche (340) verlängert ist, und
ein Verstärkungsrippenteil (330), das entlang einer Umfangsrichtung der inneren Oberfläche der Trommel (200) ausgebildet ist, um die Heber (320) zu verbinden.

6. Trommelwaschmaschine gemäß Anspruch 5, wobei das Verstärkungsrippenteil mindestens eine Rippe (330) entlang einer Länge des Hebers (320) aufweist.

7. Trommelwaschmaschine gemäß einem der Ansprüche 5 und 6, wobei das Verstärkungsrippenteil (330) eine Oberfläche aufweist, die mit einer unteren Oberfläche des Hebers (320) ausgerichtet ist.

8. Trommelwaschmaschine gemäß einem der Ansprüche 5 bis 7, wobei das Verstärkungsrippenteil (330) mehrere Vorsprünge in einer radialen Richtung aufweist.

9. Trommelwaschmaschine gemäß einem der Ansprüche 1 bis 8, wobei das Leitblech aus Kunststoff gefertigt ist.

10. Trommelwaschmaschine gemäß Anspruch 9, wobei das Leitblech als eine Einheit spritzgegossen ist.

11. Trommelwaschmaschine gemäß einem der Ansprüche 1 bis 10, wobei das Leitblech (300) derart gestaltet ist, dass es sich in eine Richtung dreht, die während des Waschens und/oder Trocknens derjenigen der Trommel (200) entgegengesetzt ist und während des Schleuderns die gleiche Richtung wie die der Trommel (200) ist.

## Revendications

1. Machine à laver du type à tambour, ayant un déflecteur (300) rotatif et comprenant :
une cuve (100) agencée dans un coffre ;
un tambour (200) monté dans une cuve (100) de manière à pouvoir tourner sous l'effet d'une force de rotation reçue d'une pièce motrice (50) ; et
le déflecteur (300) étant agencé dans le tambour (200) de manière à pouvoir tourner dans le sens opposé à un sens de rotation du tambour (200), ou dans le même sens ;
**caractérisée en ce que**
le déflecteur (300) est monté rotatif dans le même sens que le sens de rotation du tambour (200), ou dans le sens opposé, selon le sens de la force de rotation fournie par la même pièce motrice (50).

2. Machine à laver du type à tambour telle que revendiquée dans la revendication 1, dans laquelle le déflecteur (300) dans le tambour (200) est agencé pour pouvoir tourner dans un sens opposé au sens de rotation du tambour (200) pour séparer le linge d'une surface intérieure du tambour (200) lorsqu'est mise en oeuvre une fonction de séchage au cours de laquelle le linge essoré est séché par des moyens de séchage au niveau d'un côté de l'intérieur du coffre.

3. Machine à laver du type à tambour telle que revendiquée dans la revendication 1 ou 2, comprenant, en outre, un dispositif de transmission de force de rotation pour faire tourner le déflecteur (300) sous l'effet de la réception de la force de rotation depuis la pièce motrice (50).

4. Machine à laver du type à tambour telle que revendiquée dans la revendication 3, dans laquelle le dispositif de transmission de force de rotation inclut :
une boîte de vitesses (90) fixée à l'intérieur du logement (130) de boîte de vitesses ayant une extrémité avant et une extrémité arrière ouvertes pour permettre aux axes (310,210) de tambours intérieur et extérieur de les traverser ou d'y être insérés,
un pignon central (315) agencé coaxialement par rapport à un axe (310) d'entraînement pour une rotation solidaire avec l'axe (310) d'entraînement,
une pluralité de pignons planétaires (71,72) adaptés à être mus en rotation sous l'effet de la réception d'une force de rotation provenant du pignon central (315),
un prolongement d'axe (215) s'étendant depuis l'extrémité arrière de l'axe (210) de tambour ayant une circonférence intérieure avec une partie dentée (215a) pour venue en prise avec les pignons planétaires (71,72),
un support (80) ayant un axe de rotation (81) à l'avant d'une base (82), qui est un centre de rotation des pignons planétaires (71,72), et un prolongement (83) à l'arrière de la base (82) positionné entre l'axe (310) de tambour intérieur et une ouverture arrière ménagée dans la boîte de vitesse (90),
un premier moyen de rotation unidirectionnelle (401) entre une circonférence extérieure de l'axe d'entraînement (310) et une circonférence intérieure de l'axe (210) de tambour pour permettre une rotation solidaire unidirectionnelle des axes (310,210) de tambours intérieur et extérieur, et
un second moyen de rotation unidirectionnelle (402) entre une circonférence intérieure de l'ouverture d'extrémité arrière ménagée dans la boîte de vitesses (90) et une circonférence extérieure du prolongement du support (80) pour permettre une rotation unidirectionnelle du support (80).

5. Machine à laver du type à tambour telle que revendiquée dans l'une des revendications 1 à 4, dans laquelle le déflecteur (300) inclut :
une face arrière circulaire (340) ayant un diamètre inférieur à un diamètre d'une paroi arrière (120) du tambour (200),
une pluralité de redans (320) allongés chacun selon une direction avant parallèle à une surface intérieure du tambour (200) depuis la face arrière (340), et
une pièce formant nervure de renforcement (330) formée le long d'une direction circonférentielle de la surface intérieure du tambour (200) pour connecter les redans (320).

6. Machine à laver du type à tambour telle que revendiquée dans la revendication 5, dans laquelle la pièce formant nervure de renforcement inclut au moins une nervure (330) le long d'une longueur du redan (320).

7. Machine à laver du type à tambour telle que revendiquée dans l'une des revendications 5 et 6, dans laquelle la pièce formant nervure de renforcement (330) inclut une surface alignée avec une surface inférieure du redan (320).

8. Machine à laver du type à tambour telle que revendiquée dans l'une des revendications 5 à 7, dans laquelle la pièce formant nervure de renforcement (330) inclut une pluralité de projections dans une direction radiale.

9. Machine à laver du type à tambour telle que revendiquée dans l'une des revendications 1 à 8, dans laquelle le déflecteur est en plastique.

10. Machine à laver du type à tambour telle que revendiquée dans la revendication 9, dans laquelle le déflecteur est moulé par injection en une pièce unitaire.

11. Machine à laver du type à tambour telle que revendiquée dans l'une des revendications 1 à 10, dans laquelle le déflecteur (300) est conçu pour tourner dans un sens opposé à celui du tambour (200) pendant le lavage et/ou le séchage, et dans le même sens que le tambour (200) pendant l'essorage.
